# EUROPEAN PATENT SPECIFICATION

(11) **EP 3 244 595 B1**
(45) Date of publication and mention of the grant of the patent: **25.11.2020**
(21) Application number: 15879472.7
(22) Date of filing: 30.01.2015
(51) Int. Cl.: H04M 1/725, H04W 88/02, G06F 3/0488, G06F 3/0485

(54) **TERMINAL WALLPAPER CONTROL METHOD AND TERMINAL**
WALLPAPER-STEUERUNGSVERFAHREN FÜR ENDGERÄT SOWIE ENDGERÄT
TERMINAL ET PROCÉDÉ DE COMMANDE DE PAPIER PEINT DE TERMINAL

(43) Date of publication of application: 15.11.2017
(73) Proprietor: Huawei Technologies Co., Ltd., Longgang District Shenzhen, Guangdong 518129 (CN)
(72) Inventor: CHENG, Liang, Shenzhen Guangdong 518129 (CN)
(74) Representative: Epping - Hermann - Fischer
(86) International application number: PCT/CN2015/072053
(87) International publication number: WO 2016/119264

(56) References cited:
- EP-A2- 2 738 660
- WO-A1-2011/060382
- WO-A2-2011/083975
- CN-A- 101 478 600
- CN-A- 102 402 379
- CN-A- 103 793 134
- US-A1- 2011 035 708
- US-A1- 2014 362 118
- US-A1- 2015 033 160

## Description

### TECHNICAL FIELD

The present invention relates to the communications field, and in particular, to a terminal and a terminal wallpaper control method.

### BACKGROUND

Currently, desktop static wallpaper that is set by a terminal is usually a planar image. The image may be an image having a same size as a screen, and remain unchanged when the screen is flicked left and right; or may be an image wider than the screen, and move accordingly when the screen is flicked left and right. For a user, visible wallpaper remains unchanged.

US 2011/0035708 A1 discloses a method and apparatus for multi-touch wallpaper management for a mobile computing device wherein a first wallpaper image is displayed on a multi-touch-sensitive display of the mobile computing device and a multi-touch gesture is received indicating a request to change the first wallpaper image. In response to the multi-touch gesture, at least a portion of a second wallpaper image is displayed.

US 2015/0033160 A1 discloses a display device and a method for providing the same. The method includes displaying wallpaper and at least one icon, and providing a visual effect in which the wallpaper and the at least one icon are displayed in conjunction with each other according to a kind of wallpaper in response to a user command being input to the display device.

WO 2011/060382 A1 discloses a computer-implemented method for coordinating a display of on-screen elements on a computing device including generating a graphical wallpaper representation in a first process on a first visual layer on a display of a computing device, generating one or more graphical objects in a second process on a second visual layer of the display, wherein the second visual layer is positioned visually on top of the first visual layer, receiving user interactions with the one or more graphical objects and generating information that reflects the user interactions, and communicating the generated information to the first process.

### SUMMARY

In the following, parts of the description and drawings referring to embodiments which are not covered by the claims are not presented as embodiments of the invention, but as examples useful for understanding the invention.

Embodiments of the present invention provide a terminal and a terminal wallpaper control method, which may present different display effects on static wallpaper that is set by the terminal.

In accordance with an aspect of the invention, there is provided an method as set out in appended independent claim 1. In accordance with another aspect of the invention, there is provided a terminal as set out in appended independent claim 2.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a terminal wallpaper control method according to Embodiment 1 of the present invention;
FIG. 2a is a schematic diagram of terminal wallpaper before change according to Embodiment 1 of the present invention;
FIG. 2b is an effect diagram of wallpaper changing according to Embodiment 1 of the present invention;
FIG. 2c is another effect diagram of wallpaper changing according to Embodiment 1 of the present invention;
FIG. 2d is another effect diagram of wallpaper changing according to Embodiment 1 of the present invention;
FIG. 2e is another effect diagram of wallpaper changing according to Embodiment 1 of the present invention;
FIG. 3 is a schematic flowchart of a terminal wallpaper control method according to Embodiment 2 of the present invention;
FIG. 4 is an effect diagram of wallpaper changing according to Embodiment 2 of the present invention;
FIG. 5 is another effect diagram of wallpaper changing according to Embodiment 2 of the present invention;
FIG. 6 is a structural diagram of a terminal according to Embodiment 3 of the present invention; and
FIG. 7 is a structural diagram of a terminal according to Embodiment 4 of the present invention.

### DESCRIPTION OF EMBODIMENTS

The following clearly and completely describes the technical solutions in the embodiments and examples of the present invention with reference to the accompanying drawings in the embodiments of the present invention and examples useful for understanding the invention.

### Embodiment 1

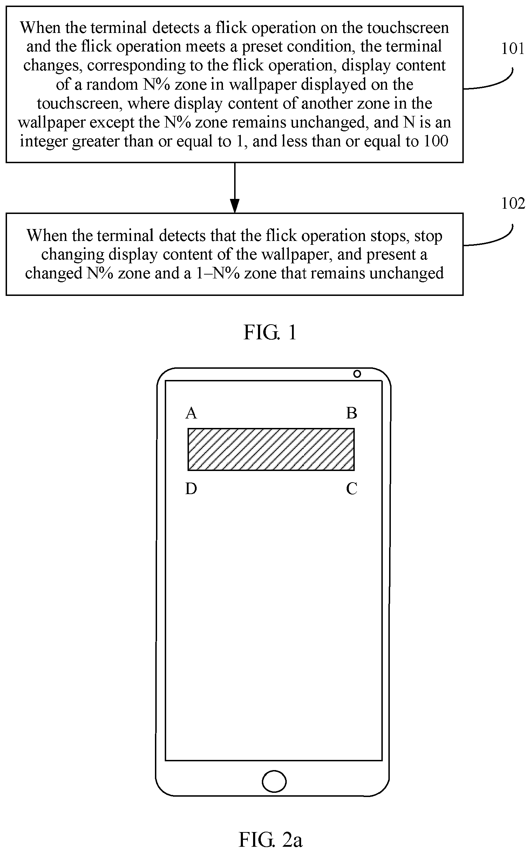

This embodiment of the present invention provides a terminal wallpaper control method, and the method is applied to a terminal equipped with a touchscreen. As shown in FIG. 1, the method includes the following steps:
101. When the terminal detects a flick operation on the touchscreen and the flick operation meets a preset condition, the terminal changes, corresponding to the flick operation, display content of a random N% zone in wallpaper displayed on the touchscreen, where display content of another zone in the wallpaper except the N% zone remains unchanged, and N is an integer greater than or equal to 1, and less than or equal to 100.

The flick operation is an operation generated on a terminal screen by a point-and-click object. The point-and-click object may be a finger of a user, or may be a stylus that is delivered with the terminal, which is not limited herein. It should be noted that, that the flick operation meets a preset condition may be performing determining on flick displacement generated by the flick operation, and determining whether the flick displacement meets the preset condition. Displacement is a vector, that is, has a size and a direction, and a direction of the displacement points from a start point to an end point. Here, because a direction of the flick displacement is a direction in which the user flicks the touchscreen, a start point of the flick displacement is a start point of this flick operation of a point-and-click object, and an end point is a current touch point of the point-and-click object on the touchscreen or a touch point of the user on the touchscreen. Because flick displacement of the point-and-click object on the touchscreen needs to be obtained in real time, an end point of the flick displacement is a current touch point of the point-and-click object. Therefore, when flick displacement of the user meets a preset condition, for example, the displacement is greater than a preset threshold, wallpaper may change with a flick operation of the point-and-click object.

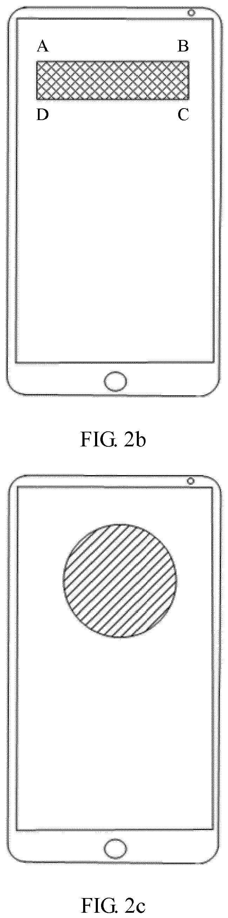

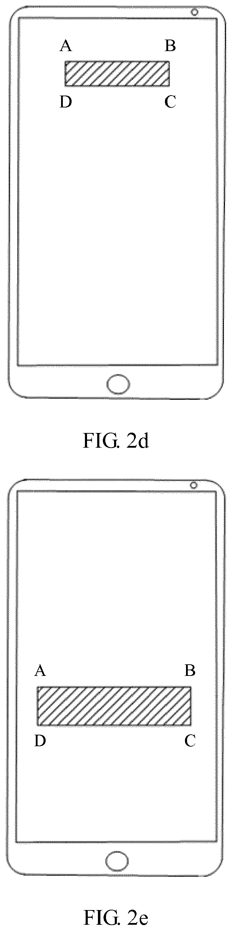

It should be noted that, that the terminal changes, corresponding to the flick operation, display content of a random N% zone in wallpaper displayed on the touchscreen specifically includes the following several implementation manners:
1. Change the wallpaper to new wallpaper. The new wallpaper has a different N% zone compared with the wallpaper (current wallpaper).
2. The terminal randomly changes at least one of the following parameters of the N% zone: a shape, a color, a size, or a location; and displays a process of a dynamic change of the N% zone. Exemplarily, when flick displacement generated when a user uses the point-and-click object to flick the touchscreen meets the preset condition, old elements in N sub-zones in the wallpaper are replaced by new elements, and a process of a dynamic change such as chipping, falling, or drifting is displayed.
   As shown in FIG. 2a, a rectangle ABCD is a zone whose area is N% in terminal wallpaper. A color of the rectangle ABCD may be changed according to a detected flick operation. When it is detected that the flick operation stops, as shown in FIG. 2b, display content of the wallpaper is a rectangle ABCD whose color is changed. Certainly, a shape of the rectangle ABCD may be changed according to the detected flick operation. When it is detected that the flick operation stops, as shown in FIG. 2c, display content of the wallpaper is a circle. Alternatively, a size of the rectangle ABCD may be changed according to the detected flick operation. When it is detected that the flick operation stops, as shown in FIG. 2d, display content of the wallpaper is a rectangle ABCD whose size is changed. Alternatively, a location of the rectangle ABCD may be changed according to the detected flick operation. When it is detected that the flick operation stops, as shown in FIG. 2e, display content of the wallpaper is a rectangle ABCD whose location is changed.
3. The terminal randomly changes at least one of the following parameters of the N% zone: a shape, a color, a size, or a location; displays a process of a dynamic change of the N% zone; and newly adds a dynamic display pattern to the wallpaper.
   The newly adding a dynamic display pattern to the wallpaper may be adding a dynamic icon such as a blinking star or a flying butterfly.
4. The terminal changes the wallpaper to random new wallpaper, and newly adds a dynamic display pattern to the new wallpaper.

In addition, because flick displacement generated by a flick operation is a vector, the preset condition may be that a direction meets a preset condition A and an absolute value of displacement meets a preset condition B. For example, a direction faces rightward (which is not an absolute due right direction) and an absolute value of displacement is greater than a preset value (which may be x% of a screen width); or a direction faces leftward, and an absolute value of displacement is greater than a preset value (which may be x% of a screen width). Therefore, the user uses the point-and-click object to perform different flick operations, and different changes occur in wallpaper. A reset color is also random. Certainly, the preset condition has a special meaning. When the flick operation does not meet a preset value specified in the preset condition, it may be considered that this flick operation is caused by a careless touch of the user on the screen and is not a flick operation generated when the screen of the terminal is flicked by performing a real operation.

102. When the terminal detects that the flick operation stops, stop changing display content of the wallpaper, and present a changed N% zone and a 1-N% zone that remains unchanged. When the terminal detects that the flick operation stops, wallpaper presented on the terminal is an effect of combining the changed N% zone and the unchanged 1-N% zone in step 101, which may be any one of effects shown in FIG. 2a to FIG. 2e.

According to the terminal wallpaper control method provided in the present invention, when the terminal detects a flick operation on the touchscreen and the flick operation meets a preset condition, the terminal changes, corresponding to the flick operation, display content of a random N% zone in wallpaper displayed on the touchscreen, where display content of another zone in the wallpaper except the N% zone remains unchanged. When the terminal detects that the flick operation stops, changing display content of the wallpaper is stopped, and a changed N% zone and a 1-N% zone that remains unchanged are presented. Therefore, different wallpaper may be presented for a user according to a user operation, and a changed zone and color are different each time the user flicks a screen. Different display effects are presented on static wallpaper that is set by the terminal.

### First Example

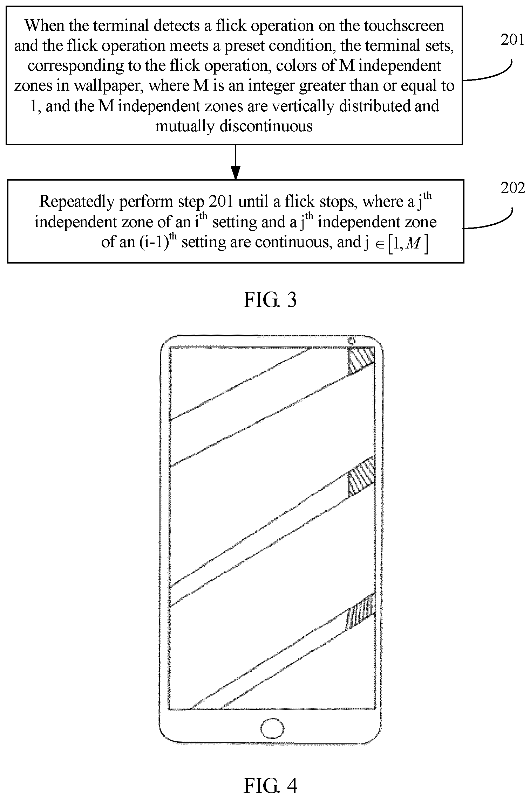

This first example provides a terminal wallpaper control method, and the method is applied to a terminal equipped with a touchscreen. In this embodiment, a method for changing a color of a random N% zone in wallpaper is described. As shown in FIG. 3, the method includes the following steps:
201. When the terminal detects a flick operation on the touchscreen and the flick operation meets a preset condition, the terminal sets, corresponding to the flick operation, colors of M independent zones in the wallpaper. M is an integer greater than or equal to 1, and the M independent zones are vertically distributed and mutually discontinuous.

Specifically, FIG. 4 shows an effect displayed on the wallpaper after step 201 is performed once. 202. Repeatedly perform step 201 until a flick stops. A j^{th} independent zone of an i^{th} setting and a j^{th} independent zone of an (i-1)^{th} setting are continuous, where j^{∈[1, *M*]}.

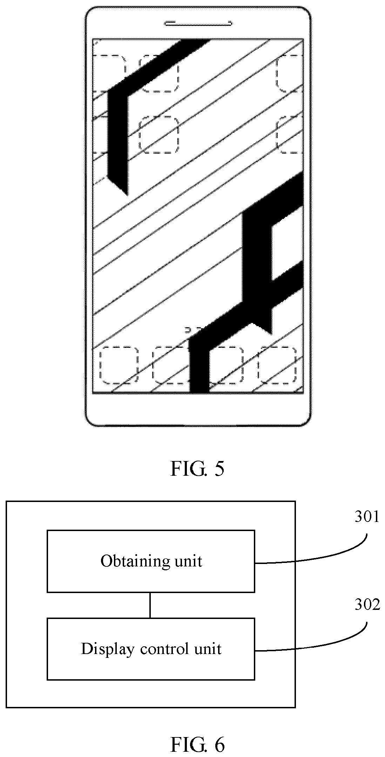

Specifically, a changing effect of the wallpaper may be shown in FIG. 5. In the wallpaper, old elements in N sub-zones (constituted by multiple independent zones that are set by repeatedly performing step 201) are replaced by new elements, and a process of a dynamic change such as chipping, falling, or drifting is displayed.

It should be noted that N pieces of wallpaper may be set in succession (a time interval between wallpaper settings is relatively short). A color of a partial zone in each piece of wallpaper is reset, and an effect same as that displayed in FIG. 5 is achieved by setting X pieces of wallpaper in succession.

Further, in a preferred embodiment of the present invention, before display content of a random N% zone in wallpaper displayed on the touchscreen is changed, the method further includes:
resetting a value of N.

Therefore, after a user flicks a screen each time, a size of a changed zone in the wallpaper is different, and diverse wallpaper is presented for the user.

According to the terminal wallpaper control method provided in the present invention, when the terminal detects a flick operation on the touchscreen and the flick operation meets a preset condition, the terminal changes, corresponding to the flick operation, display content of a random N% zone in wallpaper displayed on the touchscreen, where display content of another zone in the wallpaper except the N% zone remains unchanged. When the terminal detects that the flick operation stops, changing display content of the wallpaper is stopped, and a changed N% zone and a 1-N% zone that remains unchanged are presented. Therefore, different wallpaper may be presented for a user according to a user operation, and a changed zone and color are different each time the user flicks a screen. Different display effects are presented on static wallpaper that is set by the terminal.

### Second example

This second example provides a terminal, where the terminal is equipped with a touchscreen. As shown in FIG. 6, the terminal includes a detection unit 301 and a display control unit 302.

The detection unit 301 is configured to detect whether a flick operation exits on the touchscreen, and determine, when detecting the flick operation, whether the flick operation meets a preset condition.

The display control unit 302 is configured to: when the detection unit detects the flick operation on the touchscreen and the flick operation meets the preset condition, change, corresponding to the flick operation, display content of a random N% zone in wallpaper displayed on the touchscreen, where display content of another zone in the wallpaper except the N% zone remains unchanged, and N is an integer greater than or equal to 1, and less than or equal to 100.

The display control unit 302 is further configured to: when the detection unit 301 detects that the flick operation stops, stop changing display content of the wallpaper, and present a changed N% zone and a 1-N% zone that remains unchanged.

The display control unit 302 is specifically configured to randomly change the wallpaper to another piece of wallpaper.

The display control unit 302 is specifically configured to change at least one of the following parameters of the N% zone: a shape, a color, a size, or a location; and display a process of a dynamic change of the N% zone.

The display control unit 302 is specifically configured to randomly change at least one of the following parameters of the N% zone: a shape, a color, a size, or a location; display a process of a dynamic change in the N% zone; and newly add a dynamic display pattern to the wallpaper.

The display control unit 302 is specifically configured to change the wallpaper to random new wallpaper, and newly add a dynamic display pattern to the new wallpaper.

According to the terminal of terminal wallpaper provided in the present invention, when the terminal detects a flick operation on the touchscreen and the flick operation meets a preset condition, the terminal changes, corresponding to the flick operation, display content of a random N% zone in wallpaper displayed on the touchscreen, where display content of another zone in the wallpaper except the N% zone remains unchanged. When the terminal detects that the flick operation stops, changing display content of the wallpaper is stopped, and a changed N% zone and a 1-N% zone that remains unchanged are presented. Therefore, different wallpaper may be presented for a user according to a user operation, and a changed zone and color are different each time the user flicks a screen. Different display effects are presented on static wallpaper that is set by the terminal.

### Embodiment 2

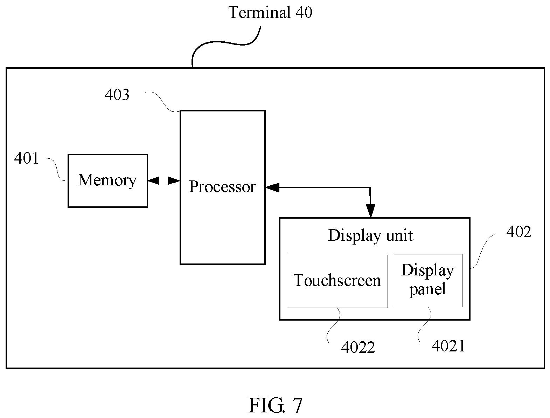

This embodiment of the present invention provides a terminal 40, where the terminal is equipped with a touchscreen. FIG. 7 shows a schematic structural diagram of a mobile terminal provided in this embodiment of the present invention. The mobile terminal provided in this embodiment of the present invention may be configured to implement methods implemented in the embodiments of the present invention shown in FIG. 1 and FIG. 3. For ease of description, only a part related to this embodiment of the present invention is shown. For specific technical details that are not disclosed, refer to the embodiments of the present invention shown in FIG. 1 and FIG. 3.

The mobile terminal may be a terminal device, such as a mobile phone, a tablet computer, a notebook computer, a UMPC (Ultra-mobile Personal Computer, ultra-mobile personal computer), a netbook, or a PDA (Personal Digital Assistant, personal digital assistant).

As shown in FIG. 7, the terminal 40 includes a memory 401, a display unit 402, and a processor 403. A person skilled in the art may understand that a structure of the mobile phone shown in FIG. 7 constitutes no limitation on the mobile phone, and the mobile phone may include parts more or fewer than those shown in FIG. 7, or a combination of some parts, or different part arrangements. The following describes each integral part of the terminal 40 in detail with reference to FIG. 7.

The memory 401 may be configured to store a software program and a module, and the processor 403 executes various functional applications of the terminal 40 and data processing by running the software program and the module stored in the memory 401. The memory 401 may mainly include a program storage area and a data storage area, where the program storage area may store an operating system, and an application program required by at least one function (such as an audio play function and a video play function), and the like; and the data storage area may store data (such as audio data, video data, and a phone book) created according to use of the terminal 40, and the like. In addition, the memory 401 may include a high-speed random access memory, and may further include a non-volatile memory, such as at least one magnetic disk storage component, a flash memory component, or another volatile solid-state storage component.

The display unit 402 may be configured to display information input by the user or information provided for the user, and various menus of the terminal 40. The display unit 402 may include a display panel 4021, and optionally, the display panel 4021 may be configured in a form of an LCD (Liquid Crystal Display, liquid crystal display), an OLED (Organic Light-Emitting Diode, organic light-emitting diode), and the like. Further, a touchscreen 4022 may cover the display panel 4021. When the touchscreen 4022 detects a touch operation on or near the touchscreen, the touchscreen transmits the touch operation to the processor 403 to determine a type of a touch event, and then the processor 403 provides corresponding visual output on the display panel 4021 according to the type of the touch event. In FIG. 7, the touchscreen 4022 and the display panel 4021 are used as two independent parts to implement an input function and an output function of the terminal. However, in some embodiments, the touchscreen 4022 and the display panel 4021 may be integrated to implement the input function and the output function of the mobile phone 300.

The processor 403 is a control center of the terminal 40, connects to, by means of various interfaces and cables, various parts of an entire mobile phone, and executes, by running or executing a software program and/or a module that are/is stored in the memory 401 and by invoking data stored in the memory 330, various functions of the terminal 40 and data processing, so as to perform overall monitoring on the mobile phone. Optionally, the processor 403 may include one or more processing units. Preferably, an application processor and a modulation and demodulation processor may be integrated into the processor 403, where the application processor mainly processes an operating system, a user interface, an application program, and the like; and the modulation and demodulation processor mainly processes wireless communication. It may be understood that the foregoing modulation and demodulation processor may either not be integrated into the processor 403.

The touchscreen 4022 is configured to detect whether a flick operation exists on the touchscreen. The processor 403 is configured to determine, when the touchscreen 4022 detects the flick operation, whether the flick operation meets a preset condition.

The processor 403 is further configured to: when a flick operation is detected on the touchscreen 4022 and the flick operation meets the preset condition, send a command to the display unit 402 so that the display unit 402 changes, corresponding to the flick operation, display content of a random N% zone in wallpaper displayed on the display panel 4021, where display content of another zone in the wallpaper except the N% zone remains unchanged, and N is an integer greater than or equal to 1, and less than or equal to 100.

The processor 403 is further configured to: when it is detected that the flick operation stops, send a command to the display unit 402 so that the display unit 402 stops changing display content of the wallpaper, and presents a changed N% zone and a 1-N% zone that remains unchanged.

The processor 403 is specifically configured to randomly change the wallpaper to another piece of wallpaper.

The processor 403 is specifically configured to send a command to the display unit 402 so that the display unit 402 changes at least one of the following parameters of the N% zone: a shape, a color, a size, or a location; and display a process of a dynamic change of the N% zone.

The processor 403 is specifically configured to send a command to the display unit 402 so that the display unit 402 randomly changes at least one of the following parameters of the N% zone: a shape, a color, a size, or a location; display a process of a dynamic change of the N% zone; and newly add a dynamic display pattern to the wallpaper.

The processor 403 is specifically configured to send a command to the display unit 402 so that the display unit 402 changes the wallpaper to random new wallpaper, and newly adds a dynamic display pattern to the new wallpaper.

According to the terminal of terminal wallpaper provided in the present invention, when the terminal detects a flick operation on the touchscreen and the flick operation meets a preset condition, the terminal changes, corresponding to the flick operation, display content of a random N% zone in wallpaper displayed on the touchscreen, where display content of another zone in the wallpaper except the N% zone remains unchanged. When the terminal detects that the flick operation stops, changing display content of the wallpaper is stopped, and a changed N% zone and a 1-N% zone that remains unchanged are presented. Therefore, different wallpaper may be presented for a user according to a user operation, and a changed zone and color are different each time the user flicks a screen. Different display effects are presented on static wallpaper that is set by the terminal.

## Claims

1. A terminal wallpaper control method, wherein the method is applied to a terminal (40) equipped with a touchscreen (4022), and comprises:
when the terminal (40) detects a flick operation on the touchscreen and the flick operation meets a preset condition, dynamically changing (101), by the terminal (40) corresponding to the flick operation, display content of a random N% zone in a wallpaper displayed on the touchscreen, which comprises randomly changing, by the terminal (40), at least one of the following parameters of the random N% zone: a shape or a location, and adding dynamic display content to the random N% zone;
wherein display content of the wallpaper except the random N% zone remains unchanged, and wherein N is an integer greater than or equal to 1 and less than 100 and wherein N% zone refers to an area of the wallpaper occupying N% of the area of the wallpaper,
wherein the flick operation meets the preset condition comprises: a direction of the flick operation meets a preset direction condition and an absolute value of displacement of the flick operation meets a preset absolute value condition; and
when the terminal (40) detects that the flick operation stops, stopping dynamically changing display content of the random N% zone in the wallpaper (102), and presenting a changed N% zone, that corresponds to the dynamically changed random N% zone when the flick operation stops, wherein a display content of a 1-N% zone in the wallpaper except the changed N% zone remains unchanged.

2. A terminal (40), comprising a memory (401), a display unit (402) and a processor (403);
wherein the memory (401) is configured to store instructions which when executed by the processor (403) makes the terminal (40) implement the method according to claim 1.

## Patentansprüche

1. Steuerverfahren für ein Endgeräte-Hintergrundbild, wobei das Verfahren auf ein Endgerät (40) angewendet wird, das mit einem Berührungsbildschirm (4022) ausgestattet ist, und Folgendes umfasst:
wenn das Endgerät (40) eine Flickoperation (schnelles Wischen, gefolgt von schnellem Abheben, des Fingers über den Bildschirm) auf dem Berührungsbildschirm erkennt und die Flickoperation eine voreingestellte Bedingung erfüllt, dynamische Änderung (101), durch das Endgerät (40) entsprechend der Flickoperation, des Anzeigeinhalts einer zufälligen N%-Zone in einem auf dem Berührungsbildschirm angezeigten Hintergrundbild, welches die zufällige Änderung mindestens eines der folgenden Parameter der zufälligen N%-Zone durch das Endgerät (40) umfasst:
eine Form oder einen Ort und das Hinzufügen von dynamischen Anzeigeinhalten zur zufälligen N%-Zone;
wobei der Anzeigeinhalt des Hintergrundbildes mit Ausnahme der zufälligen N%-Zone unverändert bleibt, und wobei N eine ganze Zahl größer oder gleich 1 und kleiner als 100 ist, und wobei sich die N%-Zone auf einen Bereich des Hintergrundbildes bezieht, der N% des Bereichs des Hintergrundbildes einnimmt, wobei die Flickoperation die voreingestellte Bedingung erfüllt, die Folgendes umfasst:
eine Richtung der Flickoperation erfüllt eine voreingestellte Richtungsbedingung und ein Absolutwert der Verschiebung der Flickoperation erfüllt eine voreingestellte Absolutwertbedingung; und,
wenn das Endgerät (40) erkennt, dass die Flickoperation stoppt, Stoppen des sich dynamisch ändernden Anzeigeinhalts der zufälligen N%-Zone in dem Hintergrundbild (102), und Darstellen einer geänderten N%-Zone, die der dynamisch geänderten zufälligen N%-Zone entspricht, wenn die Flickoperation stoppt, wobei ein Anzeigeinhalt einer 1-N%-Zone in dem Hintergrundbild mit Ausnahme der geänderten N%-Zone unverändert bleibt.

2. Terminal (40), umfassend einen Speicher (401), eine Anzeigeeinheit (402) und einen Prozessor (403);
wobei der Speicher (401) so konfiguriert ist, dass er Befehle speichert, die bei Ausführung durch den Prozessor (403) das Endgerät (40) veranlassen, das Verfahren nach Anspruch 1 zu implementieren.

## Revendications

1. Procédé de commande de fond d'écran de terminal, dans lequel le procédé est appliqué à un terminal (40) doté d'un écran tactile (4022), et consiste à : lorsque le terminal (40) détecte une instruction de tapotement sur l'écran tactile et que l'instruction de tapotement satisfait une condition prédéfinie, changer dynamiquement (101), par le terminal (40) correspondant à l'instruction de tapotement, le contenu d'affichage d'une zone aléatoire N % dans un fond d'écran affiché sur l'écran tactile, qui comprend la modification aléatoire, par le terminal (40), d'au moins un des paramètres suivants de la zone aléatoire N % : une forme ou un emplacement et l'ajout d'un contenu d'affichage dynamique à la zone aléatoire N % ; le contenu d'affichage du fond d'écran à l'exception de la zone aléatoire N % reste inchangé, et dans lequel N est un nombre entier supérieur ou égal à 1 et inférieur à 100 et dans lequel la zone N % fait référence à une zone du fond d'écran occupant N % de la zone du fond d'écran, le fait que l'instruction de papotement satisfait à la condition prédéfinie comprenant : une direction de l'instruction de papotement satisfait à une condition de direction prédéfinie et une valeur absolue de déplacement de l'instruction de papotement satisfait une condition de valeur absolue prédéfinie ; et lorsque le terminal (40) détecte que l'instruction de papotement s'arrête, arrêter de changer dynamiquement le contenu d'affichage de la zone aléatoire N % dans le fond d'écran (102), et présenter une zone modifiée N %, qui correspond à la zone aléatoire N % modifiée dynamiquement lorsque l'instruction de papotement s'arrête, un contenu d'affichage d'une zone 1-N % dans le fond d'écran, à l'exception de la zone N % modifiée, restant inchangé.

2. Terminal (40), comprenant une mémoire (401), une unité d'affichage (402) et un processeur (403) ; la mémoire (401) étant configurée pour stocker des instructions qui, lorsqu'elles sont exécutées par le processeur (403), amènent le terminal (40) à mettre en œuvre le procédé selon la revendication 1.
